# EUROPÄISCHE PATENTSCHRIFT

(11) **EP 0 799 481 B1**
(45) Veröffentlichungstag und Bekanntmachung des Hinweises auf die Patenterteilung: **21.05.2003**
(21) Anmeldenummer: 95944722.8
(22) Anmeldetag: 22.12.1995
(51) Int. Cl.: G11B 33/04

(54) **VORRICHTUNG UND VERFAHREN ZUR AUFNAHME SCHEIBENFÖRMIGER INFORMATIONSTRÄGER**
METHOD AND DEVICE FOR ACCOMMODATING DISC-SHAPED INFORMATION CARRIERS
PROCEDE ET DISPOSITIF PREVUS POUR RECEVOIR DES SUPPORTS D'INFORMATIONS SOUS FORME DE DISQUES

(30) Priorität: 22.12.1994 DE 4446063; 19.10.1995 DE 19539003; 28.11.1995 DE 19544300
(43) Veröffentlichungstag der Anmeldung: 08.10.1997
(73) Patentinhaber: Schürfeld, Patrick, 10557 Berlin (DE)
(72) Erfinder: Schürfeld, Patrick, 10557 Berlin (DE)
(74) Vertreter: Söffge, Karen
(86) Internationale Anmeldenummer: DE9501843
(87) Internationale Veröffentlichungsnummer: WO96019808

(56) Entgegenhaltungen:
- DE-U- 9 402 238
- GB-A- 2 272 685
- US-A- 5 289 918

## Beschreibung

Die vorliegende Erfindung befasst sich gemäß des Oberbegriffs des Hauptanspruchs mit einer Vorrichtung aus Pappe zur Aufnahme scheibenförmiger Informationsträger, die insbesondere für Compact Disks (CD) geeignet ist.

Eine derartige Vorrichtung ist unter anderem aus der Druckschrift FR-A-1 119 529 bekannt. Dieser Druckschrift ist eine Postkarte zu entnehmen, die aus zwei faltbaren Teilen besteht, wobei auf einem dieser Teile eine Halterung aufgebracht ist, die eine Vielzahl von faltbaren Laschen aufweist, die in die Öffnung eines anzuheftenden Gegenstandes eingreifen können. Der anzuheftende Gegenstand kann unter anderem eine Schallplatte aus Papier oder Plastik sein, wie sie in den 50er Jahren als Souvenir erhältlich waren. Als nachteilig wird an dieser Verpackungstasche empfunden, dass das Halteelement, das die Schallplatte aufnehmen soll, zu kompliziert ist, weil sie separat von der eigentlichen Grundplatte hergestellt werden und auf die Grundplatte aufgeklebt werden muss. Eine weitere Verpackungstasche ist aus der DE-G 94 02 238.0 bekannt. Diese bekannte Klappverpackung für mindestens eine CD weist eine mehrteilige Hülle mit einer Grundplatte auf, an der klemmende Befestigungselemente seitlich an der CD angeordnet sind, die die CD in der Verpackung in einer definierten Position festhalten. Weitere Verpackungshüllen sind aus der US-A-5 289 918 und der GB-A-2 272 685 bekannt.

An den bekannten Vorrichtungen wird als allgemein nachteilig empfunden, dass die informationstragenden Bereiche der CD nicht genügend vor Berührung mit der Verpackung geschützt sind und somit durch Abrieb oder ähnliches Informationen auf dem Träger verloren gehen können. Ferner ist das Handling für den Verbraucher zu umständlich und die Herstellung zu aufwendig und damit kostenintensiv.

Daher ist es Aufgabe der vorliegenden Erfindung, eine Vorrichtung bereitzustellen, die einfach in der Handhabung ist, dem Informationsträger einen sicheren Halt in der Verpackung bietet und kostengünstig in der Herstellung ist.

Diese Aufgabe wird erfindungsgemäß mit den kennzeichnenden Merkmalen des Hauptanspruchs gelöst. Vorteilhafte Weiterbildungen sind den Unteransprüchen zu entnehmen.

Die erfindungsgemäße Vorrichtung aus Pappe zur Aufnahme scheibenförmiger Informationsträger, insbesondere Compact Disks (CD) mit einer mehrteiligen Hülle mit einer Grundplatte, an der faltbare Laschen als Befestigungselemente angeordnet sind, die in das Zentralloch des scheibenförmigen Informationsträgers eingreifen, ist dadurch gekennzeichnet, dass die Laschen zwei an der Zahl und Teil er Grundplatte sind, wobei die Konturen der Laschen aus der Grundplatte herausgestanzt sind.

Vorteilhaft ist es dabei, dass die zwei Laschen seitlich umklappbar sind. Ein weiterer Vorteil besteht darin, dass die Grundplatte Teil der gesamten Hülle ist.

Um die informationstragende Seite einer CD zu schützen, ist es vorteilhaft, zwischen der Grundplatte und der CD einen Kreisring mit einem mittigen Loch anzuordnen, durch das die Laschen gesteckt werden. Dadurch, dass der scheibenförmige Informationsträger zwischen der Grundplatte und den informationstragenden Bereichen einen Luftspalt aufweist, wird die CD (Compact Disk) in der Verpackung nur an den informationsfreien Bereichen gehalten, so dass nicht ohne weiteres eine Beschädigung an den informationstragenden Bereichen der CD erfolgt.

Besonders vorteilhaft wirkt sich an dieser erfindungsgemäßen Vorrichtung aus, dass sowohl die Hülle als auch das Innenteil, das den scheibenförmigen Informationsträger aufnimmt, aus ein und demselben recycelbaren Material besteht, nämlich vorzugsweise aus Pappe. Das erfindungsgemäße Innenteil kann auf verschiedene Weise hergestellt werden. Eine vorteilhafte Ausbildung der erfindungsgemäßen Verpackungshülle ist die, dass mehrere übereinander liegende Schichten aus beispielsweise steifer Pappe zusammengeklebt werden und somit eine Verpackung für mindestens eine CD darstellt.

Ein wesentlicher Vorteil der erfindungsgemäßen Vorrichtung ist es, dass die gesamte Hülle im Prinzip aus einem flachen Material herausgestanzt wird und mit entsprechenden Faltkanten versehen ist, um anschließend den Grundriss an den Faltkanten zu einer Hülle zusammenzufalten. Vorteilhaft wirkt es sich dabei ebenfalls aus, dass der Klappdeckel sowohl einteilig als auch zweiteilig ausgeführt werden kann, was von den jeweiligen Anforderungen an das Cover abhängig ist.

Im nun Folgenden wird die Erfindung anhand von Zeichnungen im einzelnen näher erläutert. Es zeigt:
- Fig. 1:: eine schematische Faltvorrichtung (A - C) für eine spezielle Hülle (2) mit gesondertem Innenteil;
- Fig. 2:: eine schematische Explosionsdarstellung der speziellen Hülle (2) aus Fig. 1;
- Fig. 3:: eine schematische Darstellung einer aufgeklappten Hülle (2') auf deren Grundplatte ein scheibenförmiger Informationsträger (1) mit der erfindungsgemäßen Vorrichtung (39, 39') befestigt ist.

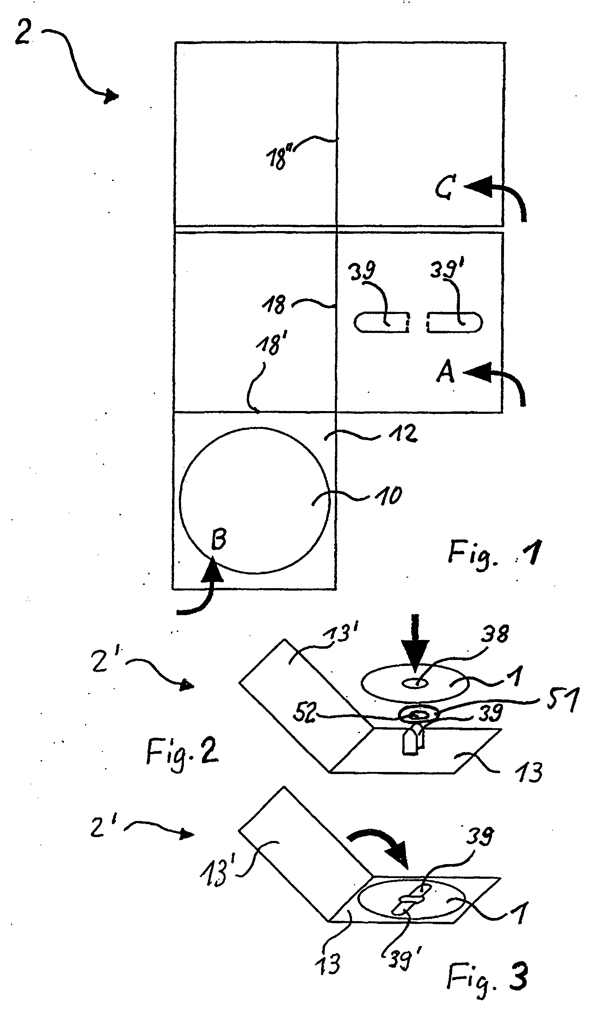

Die Fig. 1 zeigt eine schematische Darstellung einer Ausführungsform einer erfindungsgemäßen Hülle 2. Das besondere an dieser Hülle ist, dass das Innenteil aus einer Schicht, die faltbar an dem Stanzstück angeordnet ist und aus einem Stück vorgefertigten Materials, wie beispielsweise Pappe, besteht. Die erfindungsgemäßen Laschen 39,39' sind in der Grundplatte A vorgestanzt und werden bei Bedarf aus der Ebenen herausgeklappt. Die Laschen greifen im hochgeklappten Zustand in die Mittelöffnung 38 des Informationsträgers 1 ein, so dass dieser auf den informationsfreien Randflächen sicher in der Mitte gehalten wird. Die Pfeile A - C geben die Reihenfolge der Faltungen der einzelnen Seiten sinngemäß wieder. Hiernach wird die Seite A des vorgefertigten Teils zunächst auf die mittlere Seite an der Faltlinie 18 gefaltet und danach wird die Seite B ebenfalls an der entsprechenden Faltkante 18' auf die Seite A gefaltet und zum Schluss die Seite C an der Faltkante 18'' auf die angrenzende Seite. Die kreisrunde Ausnehmung 10 in dem Faltblatt 12 dient dazu, dass die CD 1 in dieser Ausnehmung eine seitliche Begrenzung erfährt, die sich in bestimmten Fällen vorteilhaft auswirken kann.

Die Fig. 2 zeigt eine schematische Explosionsdarstellung einer speziellen Hülle 2', ähnlich wie in Fig. 1, nur mit zwei Faltseiten 13, 13'. Hierbei sind die beiden Laschen 39, 39' rechtwinklig zur Oberfläche der Grundplatte 13 hochgestellt, so dass sie durch das Zentralloch 38 der CD 1 hindurch gesteckt werden können und anschließend radial nach außen gefaltet werden. Ein wesentliches Teil bildet der Ring 51, der in der Mitte ein Loch 52 oder zwei nicht gezeigte Schlitze aufweist, durch die die Laschen 39, 39' gesteckt werden. Der Ring 51 dient unter anderem dazu, eine Auflage für den informationsfreien inneren Bereich des Informationsträgers 1 (CD) zu bilden.

Die Fig. 3 zeigt in schematischer Darstellung eine aufgeklappte Hülle 2' aus zwei faltbaren Teilen, wobei ein Teil als Grundplatte 13 verwendet wird. Die CD 1 liegt flach auf der Grundplatte auf und wird durch die umgefalteten Laschen 39, 39' in seiner Position sicher gehalten.

## Patentansprüche

1. Vorrichtung aus Pappe zur Aufnahme scheibenförmiger Informationsträger (1), insbesondere Compact Disks (CD), mit einer mehrteiligen Hülle (2) mit einer Grundplatte, an der faltbare Laschen (39, 39') als Befestigungselemente angeordnet sind und aus der Grundplatte herausragen und in das Zentralloch des scheibenförmigen Informationsträgers (1) eingreifen, **dadurch gekennzeichnet, dass** die Laschen (39, 39') zwei an der Zahl und Teil der Grundplatte sind, wobei die Konturen der Laschen aus der Grundplatte herausgestanzt sind.

2. Vorrichtung nach Anspruch 1, **dadurch gekennzeichnet, dass** die Laschen (39, 39') seitlich umklappbar sind.

3. Vorrichtung nach Anspruch 1, **dadurch gekennzeichnet, dass** die Grundplatte Teil einer Hülle (2) ist.

4. Vorrichtung nach Anspruch 1, **gekennzeichnet durch** einen Kreisring (51) mit einem mittigen Loch (52), **durch** das die Laschen (39, 39') gesteckt werden.

## Claims

1. Device from cardboard for accommodating disc-shaped information carriers (1) with a sleeve (2) consisting of several parts and a basis on which foldable splicing plates (39, 39') as securing elements are arranged projecting from the basis and mesh into the central hole of the information carrier (1), **characterized in that** the two splicing plates (39, 39') are part of the basis whereby the contours of the plates are punched from the basis.

2. Device according to claim 1, **characterized in that** the splicing plates (39, 39') are folded to the side.

3. Device according to claim 1, **characterized in that** the basis is a part of the sleeve (2).

4. Device according to claim 1, **characterized by** a circular ring (51) with a central hole (52) through which the splicing plates (39, 39') are stucked.

## Revendications

1. Dispositif en carton destiné à recevoir un support d'information qui a la forme d'un disque (1), notamment de disque compact (CD), avec un étui (2) composé de plusieurs pièces avec une plaque de base sur laquelle sont disposées des pattes pliables (39, 39') comme éléments de fixation, dépassant de la plaque de base et venant s'insérer dans l'orifice central du support d'information qui a la forme d'un disque (1), **caractérisé en ce que** les pattes (39, 39') au nombre de deux font partie de la plaque de base, les contours des pattes étant découpés dans la plaque de base.

2. Dispositif selon la revendication 1, **caractérisé en ce que** les pattes (39, 39') peuvent se plier latéralement.

3. Dispositif selon la revendication 1, **caractérisé en ce que** la plaque de base fait partie d'un étui (2).

4. Dispositif selon la revendication 1, **caractérisé en ce qu'**une bague circulaire (51) pourvue d'un orifice situé au milieu (52) dans lequel viennent s'insérer les pattes (39, 39').
